# EUROPÄISCHE PATENTSCHRIFT

(11) **EP 1 216 169 B1**
(45) Veröffentlichungstag und Bekanntmachung des Hinweises auf die Patenterteilung: **23.04.2003**
(21) Anmeldenummer: 00964206.7
(22) Anmeldetag: 19.09.2000
(51) Int. Cl.: B60R 21/20, B29C 41/18, B29C 41/46

(54) **DEKORATIONSFOLIE MIT EINGEBRACHTER REISSNAHT**
DECORATIVE FILM WITH INTEGRATED BREAK LINE
FILM DECORATIF A CORDON DE RUPTURE INTEGRE

(30) Priorität: 30.09.1999 DE 29917856 U
(43) Veröffentlichungstag der Anmeldung: 26.06.2002
(73) Patentinhaber: SAI Automotive SAL GmbH, 76744 Wörth am Rhein (DE)
(72) Erfinder: ULMER, Helmut, 76744 Wörth am Rhein (DE)
(74) Vertreter: Pfenning, Meinig & Partner GbR
(86) Internationale Anmeldenummer: EP0009169
(87) Internationale Veröffentlichungsnummer: WO01023221

(56) Entgegenhaltungen:
- EP-A- 0 767 088
- FR-A- 2 721 876
- PATENT ABSTRACTS OF JAPAN vol. 1997, no. 11, 28. November 1997 (1997-11-28) & JP 09 183373 A (TOKYO SEAT KK), 15. Juli 1997 (1997-07-15)
- PATENT ABSTRACTS OF JAPAN vol. 1999, no. 03, 31. März 1999 (1999-03-31) & JP 10 329631 A (TOYOTA MOTOR CORP;TOYO TIRE & RUBBER CO LTD), 15. Dezember 1998 (1998-12-15)
- PATENT ABSTRACTS OF JAPAN vol. 014, no. 305 (M-0992), 29. Juni 1990 (1990-06-29) & JP 02 099324 A (TOYOTA MOTOR CORP), 11. April 1990 (1990-04-11)

## Beschreibung

Die Erfindung betrifft eine Dekorationsfolie nach dem Oberbegriff des Anspruchs 1.

Es ist bekannt, Innenverkleidungsteile für Kraftfahrzeuge dadurch herzustellen, daß formstabile Trägerteile und vorgeformte Oberflächenschichten (Dekorationsfolien) in gesonderten Schäumwerkzeugen durch eine sich ausbildende Schaumschicht (Hinterschäumung) miteinander verbunden werden. Vor allem Instrumententafelverkleidungen, Türinnenverkleidungen und Fahrgastsitze werden zur Zeit auf diese Weise gefertigt. Die formstabilen Trägerteile können, dabei aus an sich beliebigen Werkstoffen bestehen (Holzfaserwerkstoff, Blech), bevorzugt werden aber Trägerteile aus spritzgegossenen oder gepreßten Thermoplasten verwendet. Die vorgeformten Oberflächenschichten können sogenannte "Slush-Häute", das heißt durch Sintern oder Schlickern in gesonderten Werkzeugen hergestellte Formhäute, überwiegend aus PVC-Werkstoffen (siehe beispielsweise DE 39 32 923 A1), sein. In anderen Verfahren hergestellte Häute aus Thermoplasten oder thermoplastischen Elastomeren, wie z.B. tiefgezogene PVC-Folien oder gesprühte Polyurethanhäute sind ebenfalls gängig. Die Erfindung ist ebenfalls auch auf Häute anwendbar, die einen mehrschichtigen Aufbau besitzen, wobei zumindest die innere Schicht der Haut, die später mit dem Schaum in Kontakt steht, aus einem thermoplastischen Material bestehen muß. Herstellung und Verarbeitung von Häuten aus geeignetem Material für genannte Anwendungen sind dem Fachmann auf dem Gebiet geläufig.

Zunehmend besitzen Innenverkleidungsteile von Fahrzeugen Bereiche, hinter denen Airbags angeordnet sind, die jedoch häufig nicht erkennbar sein sollen. Um ein definiertes Aufreißen der Dekorationsfolie, im Falle einer Auslösung des Airbags sicherzustellen, ist es üblich, den Umriß des Öffnungsbereiches des Airbags in der Folie zu schwächen, zum Beispiel durch Einritzen oder Laserperforieren. Einschlägige Verfahren sind dem Fachmann bekannt und nicht Gegenstand dieser Schrift.

Die z.B. durch das Einritzen entstandene Kerbe - allgemein die Querschnittsschwächung - ist, damit sie unsichtbar bleibt, natürlich rückseitig in die Dekorationsfolie eingebracht, also der Hinterschäumung zugekehrt. Beim Hinterschäumen kann daher der expandierende Schaum in die Schwächungskerbe eindringen und diese wieder verkleben. Die durch die Schwächung vorgegebenen definierten Reißkräfte der Reißnaht in der Dekorationsfolie werden dadurch wieder undefiniert, wodurch das Verhalten des Aufreißbereiches des Airbags bei dessen Auslösung nicht mehr mit der erforderlichen Sicherheit voraussagbar ist. Ein weiteres Problem ergibt sich daraus, daß an den Stellen, an denen sich die Kerben befinden, eine Diffusion von Weichmachern aus der Dekorationsfolie in die Hinterschäumung begünstigt wird. Die Langzeitbeständigkeit der physikalischen Werte der Reißnaht kann dadurch beeinträchtigt werden; aber auch eine Verfärbung der Dekorationsfolie auf der Sichtseite kann längerfristig nicht ausgeschlossen werden. In dem gattungsgemäßen Gebrauchsmuster DE 298 21 409 wird zur Lösung der Diffusionsproblematik vorgeschlagen, den Bereich der Schwächungskerbe durch eine Schutzlackierung zu versiegeln: Wenn dabei jedoch ein gut haftfähiger Schutzlack verwendet wird, was für eine wirksame Versiegelung notwendig ist, ist aber ebenfalls mit einer Verklebung der Schwächungskerbe zu rechnen. Zusätzlich wird ein weiterer, schwer automatisierbarer Verfahrensschritt erforderlich.

Der Erfindung liegt daher die Aufgabe zugrunde, eine Dekorationsfolie anzugeben, die im Öffnungsbereich eines Airbags eine durch eine Querschnittsschwächung vorgegebene Reißnaht besitzt, bei der die Gefahr einer Verklebung der Schwächungskerbe durch die Hinterschäumung und die Gefahr einer zusätzlichen Weichmacher-Diffusion in diesem Bereich ausgeschlossen sind.

Diese Aufgabe wird durch die Merkmale des kennzeichnenden Teils des Schutzanspruches 1 gelöst; die Ansprüche 2 bis 6 geben vorteilhafte Weiterbildungen an.

Dadurch, daß die Materialschwächung eine innere Kerbe mit beidseitig durch das Material der Dekorationsfolie geschlossenen Enden ist, d.h. daß auch die der Hinterschäumung zugekehrte Rückseite der Dekorationsfolie eine geschlossene Oberfläche besitzt, kann die Hinterschäumung die Materialtrennung nicht wieder verkleben, so daß die definierten Reißkräfte in jedem Fall erhalten bleiben. Auch eine Weichmacher-Diffusion im Bereich der Schwächungskerbe entfällt wegen der geschlossenen Grenzfläche. Dabei kann in Analogie zu einer durch Einritzen hergestellten Kerbe die innere Kerbe durchgehend sein, entsprechend dem gewünschten Verlauf der Reißnaht. Es ist aber auch möglich, in Analogie zu der ebenfalls praktizierten Laserperforation eine dem Verlauf der Reißnaht entsprechenden Aneinanderreihung einer Vielzahl von einzelnen inneren Kerben vorzusehen. In allen Fällen hat sich gezeigt, daß die innere Kerbe nicht zwingend über die gesamte Länge der Reißnaht zusammenhängend bestehen muß; vielmehr ist es ausreichend, wenn die innere Kerbe abschnittsweise erzeugt ist. Lage und Größe der abschnittsweisen inneren Kerbe richten sich neben den Eigenschaften des verwendeten Hautmaterials nach der Geometrie der Abdeckklappe (des Durchtrittsbereichs des Airbags durch die Instrumententafel) bzw. der geforderten Ausdrückkräfte und müssen in aller Regel experimentell ermittelt werden. Gängige, vorhandene Ausrüstungen können hierbei benutzt werden.

Für die Realisierung der inneren Kerbe bieten sich verschiedene Möglichkeiten an, wobei allen gemeinsam ist, daß eine entweder urförmlich oder in einem weiteren Arbeitsgang nach der Herstellung der Haut eingebrachte offenen Kerbe nachträglich auf der schaumzugewandten Seite oberflächig wieder geschlossen (verschweißt) wird und so die innere Kerbe erzeugt wird. Das Schließen kann in verschiedenen, alternativen Verfahren erfolgen:
1. Verwenden einer temperierten Schiene, geformt nach dem Verlauf der Reißnaht: durchgängig, dem gesamten Verlauf der Reißnaht folgend oder aber mit Unterbrechungen nur partiell über den Verlauf der Reißnaht.
2. Verwenden einer temperierten, entsprechend dem Verlauf der Reißnaht führbaren (kurzen) Schweißkufe.
3. Verwenden einer temperierten, entsprechend dem Verlauf der Reißnaht führbaren Rolle.

Schienen oder Rollen sind zumindest auf die Erweichungstemperatur der Dekorationsfolie temperiert und eventuell mit einer Antihaftbeschichtung versehen. Die Beheizung erfolgt zweckmäßigerweise elektrisch (gute Regelbarkeit); andere Beheizungen sind natürlich nicht ausgeschlossen.

Die temperierten Schweißwerkzeuge werden mit leichtem Andruck über die Schwächungskerbe (oder die Laserperforation) geführt. Durch leichten Andruck werden einerseits die Kerbränder aneinander gedrückt und thermisch verschweißt, so daß kein zusätzliches Schweißmaterial benötigt wird, andererseits verwölbt sich die Kerbe tonnenförmig, so daß die innere Materialtrennung sicher erhalten bleibt.

Durch die Temperatur der Schweißwerkzeuge sowie deren Kontaktzeit mit dem Folienwerkstoff und deren Andruckkraft läßt sich eine geometrisch definierte Schweißung durchführen, und damit ein definiertes Reißverhalten der Reißnaht in der Dekorationsfolie sicherstellen.

Das Verwenden einer geformten Schweißschiene, mit der eine durchgehende Kerbe in einem Arbeitsgang schließbar ist, ist problematisch, da die Häute eine gewisse Dickentoleranz besitzen, deren Berücksichtigung mit einer Schweißschiene nur unzureichend möglich ist. Kurze Schweißkufen oder Schweißrollen dagegen können Dickentoleranzen der Haut besser ausgleichen, beispielsweise dadurch, daß sie federnd mit konstanter Andruckkraft geführt werden. Eine Bahnführung der Schweißkufen oder -rollen läßt sich einfach dadurch realisieren, daß sie direkt mit dem Ritzmesser oder dem Laserkopf gekoppelt werden.

Die Erfindung wird nunmehr anhand eines in den Figuren 1 bis 4 wiedergegebenen Ausführungsbeispiels näher beschrieben. Es zeigen in vereinfachter Darstellung:
- Fig. 1: einen Schnitt durch eine Dekorationsfolie am Ort einer Einkerbung,
- Fig. 2: in gleicher Darstellung das Aufbringen der Schweißkufe,
- Fig. 3: das Verschweißen der Kerbränder,
- Fig. 4: die innerhalb der Folie entstandene innere Kerbe, die die Reißnaht vorgibt, und
- Fig. 5: einen Schnitt durch eine zweischichtige Dekorationsfolie.

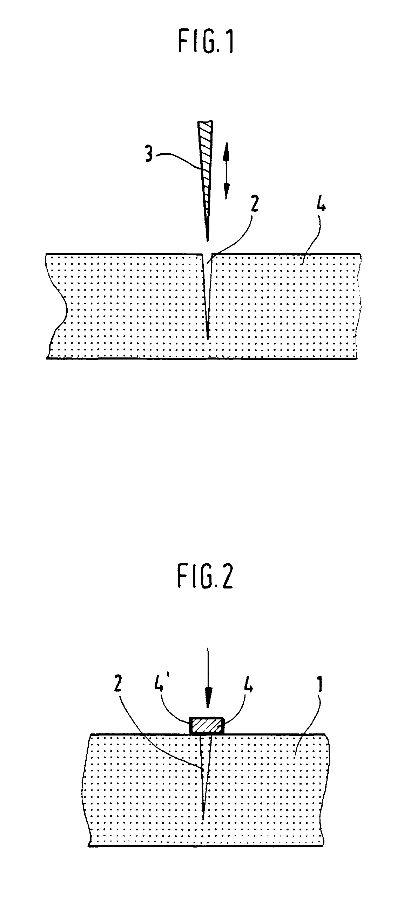

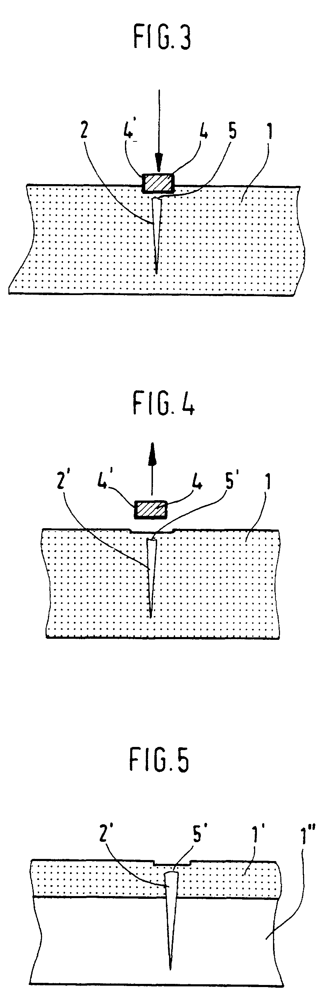

In Figur 1 ist mit 1 die Dekorationsfolie bezeichnet, in die z.B. durch ein Messer 3 die Kerbe 2 eingeschnitten ist. Nach dem Entfernen des Messers 3 wird die heizbare Schweißkufe 4 (Heizvorrichtung ist nicht mit dargestellt) über die Kerbe 2 gebracht (Fig. 2). Die Heizkufe 4 ist z.B. mit einer nicht zwingend notwendigen Antihaftbeschichtung 4' beschichtet, um ein Anhaften der Haut 1 beim Schweißen zu verhindern. In Pfeilrichtung übt dann die Schweißkufe 4 soviel Druck auf die Ränder der Kerbe 2 aus, daß diese im begrenzten Bereich 5 zusammengedrückt und verschweißt werden (Fig. 3). Nach dem Entfernen der Schweißkufe 4 erstarrt der zuvor angeschmolzene Bereich und es verbleibt eingebettet in die Haut als Querschnittsschwächung die innere Kerbe 2', die durch den verschweißten Bereich 5' abgeschlossen ist, so daß die Haut 1 trotz einer Querschnittsschwächung der Reißnaht zur Hinterschäumung hin eine geschlossene Oberfläche aufweist (Fig. 4).

Fig. 5 zeigt eine Dekorationsfolie mit zweischichtigem Aufbau, nämlich einer Schicht 1', welche mit der Schaumschicht verbunden wird, und einer Schicht 1", welche die Sichtseite der Folie bildet. Die Kerbe 2' erstreckt sich jeweils durch einen Teil der Schichten 1' und 1", wobei sie am in der Schicht 1' befindlichen Ende durch den verschweißten Bereich 5' verschlossen ist. Die Schicht 1' besteht aus diesem Grund aus thermoplastischem Material, währen für die Schicht 1" dieses Erfordernis nicht besteht.

## Patentansprüche

1. Geformte, hinterschäumbare Dekorationsfolie (1) zur Verwendung in Fahrzeuginnenräumen, welche im Durchtrittsbereich eines Airbags eine durch eine Querschnittsschwächung vorgegebene Reißnaht besitzt, wobei die Querschnittsschwächung eine auf der der Hinterschäumung abgewandten Seite durch das Material der Dekorationsfolie geschlossene Kerbe (2') ist,
**dadurch gekennzeichnet, daß** die der Hinterschäumung zugewandte Seite der Kerbe oberflächig durch einen verschweißten Bereich (5') einer aus thermoplastisches Material bestehenden äußeren Schicht der Dekorationsfolie verschlossen ist.

2. Dekorationsfolie nach Anspruch 1, **dadurch gekennzeichnet, daß** die Querschnittsschwächung eine dem Verlauf der Reißnaht zumindest partiell folgende durchgehende innere Kerbe (2') ist.

3. Dekorationsfolie nach Anspruch 1, **dadurch gekennzeichnet daß** die Querschnittsschwächung eine den Verlauf der Reißnaht zumindest partiell folgende Aneinanderreihung einer Vielzahl einzelner innerer Kerben ist.

4. Dekorationsfolie nach mindestens einem der Ansprüche 1 bis 3, **dadurch gekennzeichnet daß** sie eine durch Tiefziehen oder Formsintern hergestellte thermoplastische Kunststoffhaut (1) ist.

5. Dekorationsfolie nach mindestens einem der Ansprüche 1 bis 3, **dadurch gekennzeichnet, daß** sie eine durch einen Spritz-, Gieß- oder Sprühprozeß hergestellte thermoplastische Kunststoffhaut (1) ist.

6. Dekorationsfolie nach mindestens einem der Ansprüche 1 bis 3, **dadurch gekennzeichnet, daß** die Dekorationsfolie einen mindestens zweischichtigen Aufbau aufweist, wobei mindestens die auf der hinterschäumbaren Seite angeordnete Schicht (1') aus thermoplastischem Material besteht.

## Claims

1. Shaped decorative film (1) which can be foambacked for use in vehicle cabins, having in the passage area of an airbag a break line produced by a cross-sectional weakening, and the cross-sectional weakening is a notch (2') which is closed by the material of the decorative film and located at the side facing away from the foambacking, **characterised in that** the side of the notch facing towards the foambacking is at its surface closed by a welded area (5') of an outer layer of the decorative film made of thermoplastic material.

2. Decorative foil according to Claim 1, **characterised in that** the cross-sectional weakening is a continuous inner notch (2') which at least partially follows the course of the break line.

3. Decorative foil according to Claim 1, **characterised in that** the cross-sectional weakening is a series arrangement of a plurality of individual inner notches which at least partially follow the course of the break line.

4. Decorative foil according to at least one of Claims 1 to 3, **characterised in that** it is a thermoplastic synthetic skin (1) produced by deep-drawing or shape sintering.

5. Decorative film according to at least one of Claims 1 to 3, **characterised in that** it is a thermoplastic synthetic skin (1) produced by way of an injection, casting or spraying process.

6. Decorative film according to at least one of Claims 1 to 3, **characterised in that** the decorative film is of at least two-layered structure, and at least the layer (1) on the foambacked side is composed of thermoplastic material.

## Revendications

1. Feuille décorative (1) préformée, montée sur un support de mousse, destinée à être utilisée dans des intérieurs de véhicules, possédant une ligne de rupture aménagée dans la zone de passage d'un coussin gonflable, prédéfinie par un affaiblissement de la section transversale, l'affaiblissement de la section transversale étant constituée par une encoche (2') aménagée du côté éloigné du support de mousse et refermée par la matière de la feuille décorative,
**caractérisée en ce que** le côté de l'encoche, qui est tourné vers le support de mousse, est refermé de façon superficielle par une zone soudée (5') d'une couche extérieure de la feuille décorative, qui est constituée d'une matière thermoplastique.

2. Feuille décorative selon la revendication 1, **caractérisée en ce que** l'affaiblissement de la section transversale est constitué par une encoche intérieure (2') épousant au moins partiellement la trajectoire de la ligne de rupture.

3. Feuille décorative selon la revendication 1, **caractérisée en ce que** l'affaiblissement de la section transversale est constitué par une succession d'une multitude d'encoches intérieures individuelles épousant au moins partiellement la trajectoire de la ligne de rupture.

4. Feuillé décorative selon l'une au moins des revendications 1 à 3, **caractérisée en ce qu'**elle consiste en une feuille de matière thermoplastique (1) fabriquée par emboutissage ou par frittage en moule.

5. Feuille décorative selon l'une au moins des revendications 1 à 3, **caractérisée en ce qu'**elle consiste en une feuille de matière thermoplastique (1) réalisée par un procédé d'injection, de moulage ou de pulvérisation.

6. Feuille décorative selon l'une au moins des revendications 1 à 3, **caractérisée en ce que** la feuille décorative présente une structure au moins bi-couche, où au moins la couche (1') située du côté du support en mousse est faite en une matière thermoplastique.
